# EUROPEAN PATENT SPECIFICATION

(11) **EP 1 695 514 B1**
(45) Date of publication and mention of the grant of the patent: **22.10.2008**
(21) Application number: 04806529.6
(22) Date of filing: 15.12.2004
(51) Int. Cl.: H04L 29/06, H04Q 7/24

(54) **COMMUNICATION NETWORK**
KOMMUNIKATIONSNETZ
RESEAU DE COMMUNICATIONS

(30) Priority: 19.12.2003 GB 0329499
(43) Date of publication of application: 30.08.2006
(73) Proprietor: Nokia Corporation, 02150 Espoo (FI)
(72) Inventor: HELLGREN, Vesa, FIN-00530 Helsinki (FI)
(74) Representative: Ruuskanen, Juha-Pekka
(86) International application number: PCT/IB2004/004369
(87) International publication number: WO 2005/062570

(56) References cited:
- WO-A-03/021372
- WO-A-03/024139
- WO-A-03/084262
- US-B1- 6 636 491
- "Digital cellular telecommunications system (Phase 2+); Universal Mobile Telecommunications System (UMTS); Policy control over Go interface (3GPP TS 29.207 version 5.4.0 Release 5); ETSI TS 129 207" ETSI STANDARDS, EUROPEAN TELECOMMUNICATIONS STANDARDS INSTITUTE, SOPHIA-ANTIPO, FR, vol. 3-CN3, no. V540, June 2003 (2003-06), XP014009628 ISSN: 0000-0001

## Description

### Field of the Invention

The present invention relates to a communication network and in particular, but not exclusively, to the denial of access to a service.

### Background of the Invention

A communication system is a facility that enables communication between two or more entities such as user terminal equipment and/or network entities and other nodes associated with a communication system. The communication may comprise for example, communication of voice, electronic mail (email), text messages, data, multimedia and so on.
The communication may be provided by a fixed line and/or wireless communication interfaces. A feature of wireless communication systems is that they provide mobility for the users thereof.

An example of a communication systems providing wireless communication is a public land mobile network (PLMN). An example of the fixed line system is a public switched telephone network (PSTN).

A communication system typically operates in accordance with a given standard or specification which sets out what the various elements of the system are permitted to do and how that should be achieved. For example, the standard or specification may define if the user, or more precisely user equipment, is provided with a circuit switched server or a packet switched server or both. Communication protocols and/or parameters which should be used for the connection are also typically defined. For example, the manner in which communications are implemented between the user equipment and the elements of the communication networks is typically based on the predefined communication protocol.
In other words, a specific set of "rules" on which the communication can be based needs to be defined to enable the user equipment to communicate via the communication systems.

The introduction of third generation (3G) communication systems will significantly increase the possibilities for accessing services on the Internet via mobile user equipment (UE) as well as other types of user equipment.

Various user equipment such as computers (fixed or portable), mobile telephones, personal data assistants or organisers and so on are known to the skilled person and can be used to access the Internet to obtain services. Mobile user equipment sometimes referred to as mobile stations can be defined as means which is capable of communication via a wireless interface with another device such as a base station of a mobile telecommunications network or any other station.

The term "service" used above and hereinafter will be understood to broadly include, any service or goods which are used and or the user may desire, require or be provided with. The term would be understood to cover the provision or complementary services. In particular, but not exclusively, the term "service" will be understood to include Internet protocol multimedia IM services, conferencing, telephoning, gaming, presence, ecommerce and messaging e.g. instant messaging.

GPRS (General Packet Radio Service) is a packet based system which can be used either in the context of the third generation standards or in conjunction with the GSM (Global System for Mobile Communications) standard. Intelligent content delivery (ICD) is used to make the GPRS system service aware. ICD allows the definition of services. Each service is defined as a set of flow specifications. Each flow specification consists, for example, of the uplink IP (Internet Protocol) address or subnet and a port number.
For some application layer protocols such as HTTP (Hyper text transfer protocol) and WAP (Wireless application protocol) which are used in the GPRS system, the ICD system allows the definition of flow specifications which are identified based on the URL (Uniform resource locater).

One of the core network elements used in the ICD system is the GGSN (gateway GPRS support node). The GGSN is the gateway between the GPRS system and public or private data networks. In other words, all traffic between the GPRS system and the public/private data networks can be analysed in the GGSN. In the ICD system, the GGSN is service aware which means it both supports service switching and differentiated charging. This is based on the flow specifications which are used to classify traffic. Each flow specification also includes parameters which control the charging so that the GGSN is able to charge each traffic flow differently based on the matching flow specification. Service switching makes it possible to access different public or private data networks under the same PDP (packet data protocol) context.

However, this has some problems. In particular, each flow specification is linked to one service. One part of the ICD system is the ability to allow or deny access to services. The mobile subscriber may subscribe to or unsubscribe from services. The GGSN is responsible for determining whether the mobile subscriber is permitted to use a certain service. When the PDP context is activated, the GGSN receives the user profile from a subscription manager, RADIUS server or the like which lists all the services that the mobile subscriber is allowed to use. If the mobile subscriber is not allowed to use the service, the access to this service is denied. There is a second situation in which access to the service must be denied. If the mobile subscriber is a prepaid customer, then the service may be denied because the mobile subscriber does not have sufficient funds to use the service.

Service denial is easy to implement. The GGSN simply discards all the packets which match the denied flow specification. However, there is a problem that the mobile subscriber does not receive any proper notification as to why the flow specification has been denied. From the mobile subscriber's point of view, the service denial may be associated with the problem in the network. Thus, the mobile subscriber may think that all the problems are with the network and may have reservations about continuing to subscribe to the service or putting more money into his prepaid account.

The ICD system currently proposes that instead of just blocking the traffic to the denied surface, the traffic is redirected to another location. The new location will then inform the user as to why the service was denied. The new location may also provide the method for solving the problem. For example, if the service is denied because it has not been subscribed to, the new location may provide a link to the subscription management system where the mobile subscriber can up date his subscriptions. If the service is denied because the prepaid account does not have sufficient funds, the new location may provide a link to the management system where the mobile subscriber can transfer funds to his prepaid account.

However, this solution is protocol dependent. If the denied service is based on WAP (or HTTP) the new location may be just WAP (or HTTP) portal. The WAP (or HTTP) browser shows the information received from the page. However, this works only for WAP or HTTP based services. If the service is using some other protocol, the new location can not use the WAP or HTTP protocol. In other words, the new location must use the same protocol as the originally denied service. For example, if the user is trying to access email, the new location can not return a WAP or HTTP page. The email application in the phone has not requested a WAP or HTTP page so it will not accept it.

A further problem is that the proposed ICD solution works only in the cases where a TCP (transmission control protocol) connection is not already open when the service has been denied. The prepaid account may become empty after the TCP connection has been opened. In addition, if the denied service is defined with a URL, the URL may not be part of the first TCP packets. Thus, in this case, the TCP connection may already be open before the GGSN is able to determine that the service should be denied.

PCT publication WO 03/084262 describes a method and apparatus for dealing with a connection context request to establish a connection between a mobile station (MS) and a network gateway element.

PCT publication WO 03/024139 describes a system and method of provisioning services for a mobile communication device.

PCT publication WO 03/021372 describes a system and method for a two-way packet-centric like radio communication network that transmits signals and data over Internet Protocol.

"Digital cellular telecommunications system (Phase 2+); Universal Mobile Telecommunications System (UMTS); Policy control over Go interface" (3GPP TS 29.207 version 5.4.0 Release 5) describes the stage 3 specification of the Go interface (the interface between the GGSN and the Policy Decision Function (PDF) ).

Embodiments of the present invention seek to address or at least mitigate the problems described above.

### Summary of the invention

According to one aspect of the invention, there is provided a gateway node for use in a communications network, said node being arranged to receive a request for a service, to determine if said service can be provided and if not to generate and send a message to a requester of the service with an indication as to a cause as to why said service cannot be provided wherein the node is arranged to indicate as a source of said message a provider of said requested service.

According to another aspect of the invention there is provided a method of communication comprising: determining in a gateway node if a requested service can be provided; if not, sending a message to a requester of service, said message indicating a cause for said service not being provided and indicating as a source of said message a provider of said requested service; and discarding in said gateway node, traffic received from said requester.

### Brief Description of Drawings

For a better understanding of the present invention and as to how the same may be carried into effect, reference will now be made by way of example only to the accompanying drawings in which:
Figure 1 shows a schematic system in which embodiments of the present invention can be implemented;
Figure 2 shows the signal flow in a first embodiment of the invention; and
Figure 3 shows the signal flow in a second embodiment of the invention.

### Detailed description of embodiments of the invention.

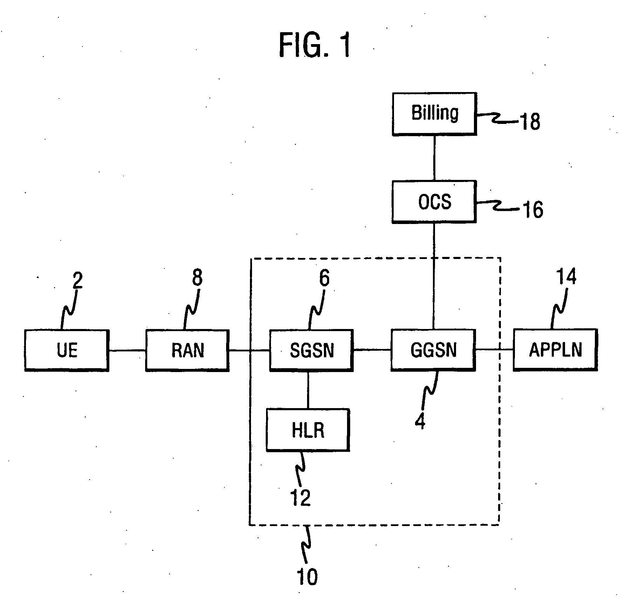

Reference is made to figure 1 which shows schematically a system in which embodiments of the invention can be implemented. Embodiments of the present invention will be described in the context of GPRS system. However, it should be appreciated that embodiments of the present invention can be applied to any other communication system and in particular but not exclusively to packet based systems. Embodiments of the invention may have application in circuit switched systems. Embodiments of the invention are particularly applicable to IP systems.

The system comprises user equipment 2. The user equipment 2 can take any suitable form as discussed previously. The user equipment 2 is arranged to communicate with a radio access network (RAN) 8 via a wireless connection. This wireless connection may be at any suitable frequency such as for example a radio frequency. The radio access network 8 generally consists of a base station entity (sometimes referred to as node B). For the purpose of this document, the term base station will be used and is intended to cover any suitable entity. The radio access network 8 also comprises a control element. Depending on the standard, the control element can be referred to as a radio network controller (RNC) in the case of a UMTS (universal mobile telecommunication system) or base station controller (BSC) in the case of a GSM system. It is intended that the term controller cover any such control entity. In some arrangements, the control function is provided separately from the base station function and a single control entity may control a number of base stations. In other embodiments of the present invention, each base station may incorporate part of the control function. The radio access network 8 is arranged to communicate with a core network 10.

The core network 10 illustrated in Figure 1 is a packet switched core network. The core network comprises at least one serving GPRS support node (SGSN) which is used to switch the packet switched transactions and at least one GGSN 4 which acts as a switch at the point where the core network 10 is connected to external packet switched networks. The core network 10 also comprises a HLR 12 (home location register) or similar entity. The HLR or similar entity stores subscription information defining the service to which the user has subscribed. It should be appreciated that the subscription information may be contained just in the HLR, just in another database or in a combination of the HLR and other database. The other database may be outside the core network. In the embodiment described later, a subscription manager is described as containing subscription information.

The GGSN 4 is connected to an application 14. This is schematic and is intended to show that the application 14 is provided by a separate network. However, it should be appreciated, that the application may be provided as part of the same network, may be provided as part of an IP multimedia subsystem or any other suitable network.

The GGSN 4 is also connected to an OCS (On line charging system) 16. The OCS 16 is shown as being external to the core network 10. In alternative embodiments of the present invention, the OCS 16 may be in the core network. The OCS 16 may be connected to a billing system 18.

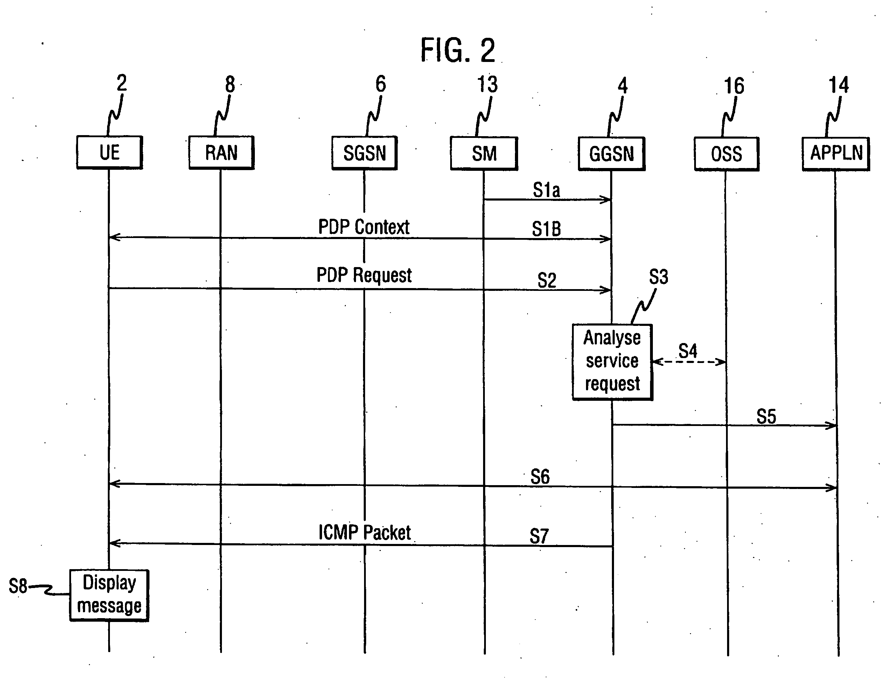

Reference will now be made to figure 2 which shows the signalling in a first embodiment of the present invention. The embodiment shown in figure 2 uses the existing IP control protocol ICMP (Internet control message protocol) to inform the user equipment if traffic to the destination is blocked. This way the application in the user equipment, which is trying to use the service, will receive a notification that the requested destination can not be reached.

Step S1a and step S1b are interrelated and can be regard as part of the same step. In step S1b, a PDP context is set up between the user equipment and the GGSN. In setting up the PDP context, subscriber information is transferred to the GGSN 4. In the embodiment shown in figure 2, a subscriber manager 13 is shown as providing the subscriber information to the GGSN 4. However, as discussed in relation to figure 1, the subscriber information can come from any suitable source. The subscriber information includes information as to which service the user has subscribed.

In step S2, the user equipment 2 sends a PDP request to the GGSN 4. The PDP request is intended for a certain destination, which in the embodiment shown in figure 2 is the application 14. It should be appreciated that all packets will be routed via the GGSN.

In step S3, the GGSN performs traffic analysis. The packet will match with a certain flow specification F. The flow specification F is part of service S. From the information received from the subscriber manager 13 and stored locally at the GGSN, the GGSN 4 will determine if the service S has been denied to the mobile subscriber. As mentioned previously, there are two reasons for denying a service to a user. The first is that the user does not have sufficient funds and the second is that the server has not subscribed to the service. In the case that the user has not subscribed to the service, the GGSN will be able to determine this from information received from the service manager.

If the user is a prepaid user, then the GGSN 4 will need to get information from the OCS 16 indicating whether or not there are sufficient funds for the particular service. This is shown schematically by the dotted line between the GGSN 4 and the OCS 16 and is referenced S4. This can be done in a number of ways. The GGSN can request information from the OCS 16 as to whether or not there are sufficient funds for the requested service with the OCS making the decision. Alternatively, the GGSN may be provided with information from the OCS as to the funds available to the user and will make the determination as to whether or not the user does have sufficient funds. Thus, step S4 may take place when the PDP context is set up, when the PDP request is received, after the initial analysis of the service has been carried out to determine whether or not the user has subscribed to the service or at any other suitable time.

If the service can be provided, then the PDP request is forwarded in step S5 to the application and in step S6, data is transferred from the application to the user equipment.

However, if it is determined that the service can not be provided, either because the user does not have sufficient funds or because the user has not subscribed to the service, the next step will be S7. The packet received from the user equipment will however, be discarded by the GGSN 4.

In step S7, the GGSN will send an ICMP message back to the user equipment. When the GGSN sends the ICMP message, it will use the IP address of the actual destination as a source IP address. In this way, the user equipment thinks that ICMP message comes from the actual destination (i.e. the application) and the GGSN is transparent to the user equipment. In other words, the GGSN acts as a transparent proxy. The ICMP packet S7 can include information indicating the reason for the service refusal, for example, insufficient funds or service not subscribed to. The ICMP packet will have code values with different meanings associated with different code values.

In step S8, the application contained in the user equipment will notify the user that the mobile subscriber can not access the destination address. The application causes an error message, defined by the ICMP message to be displayed on the display of the mobile station.

If packets coming from the user equipment were just discarded without the ICMP messaging described, the application and the user equipment may retransmit the packet because it may assume that it was lost due to some network problem. This consumes expensive radio resources so even though the mobile subscriber can not access the service, he will consume unnecessarily radio resources. In embodiments of the invention where the retransmission control implemented in the user equipment takes the ICMP errors into account, then usage of radio resources will be improved.

Embodiments of the present invention may only require changes to the GGSN implementation. The ICMP is part of the standard IP protocol stack so no changes are required in the user equipment. The implementation depends on the protocol which is used to access the service.

The GGSN may be modified to send an ICMP message destination unreachable (as defined in RFC 792, IETF standard and hereby incorporated by reference). The used code in the message will have the value protocol unreachable - value 2 or port unreachable value 3. The first code value shall be used if the service is accessed via a protocol which is not using port numbers. In other words, TCP or UDP (user datagram protocol) are not being used. In embodiments of the present invention, the GGSN will act as a proxy host. The GGSN shall use the IP address of the destination as a source address of the ICMP message.

In some embodiments of the present invention, the GGSN may also use alternative code values. According to RFC 1812 (another IETF standard which is hereby incorporated by reference) the router can use code value communication administratively prohibited (13) if the administrative filtering prevents access to the destination.

In one embodiment to the present invention, the UE implementation may be changed. In this embodiment, a new code value, and/or a new ICMP message type may be provided. In this proposal, two new code values for the two cases where service denial occurs will be provided. The first code value will be for the services not subscribed and the second would be for where there are insufficient funds to access a service.

Embodiments of the present invention can be used so that if the traffic related to the denied service can be directed to a new location, as is already known, then the previous solution would be used. If redirection of the traffic is not possible then embodiments of the present invention would be used.

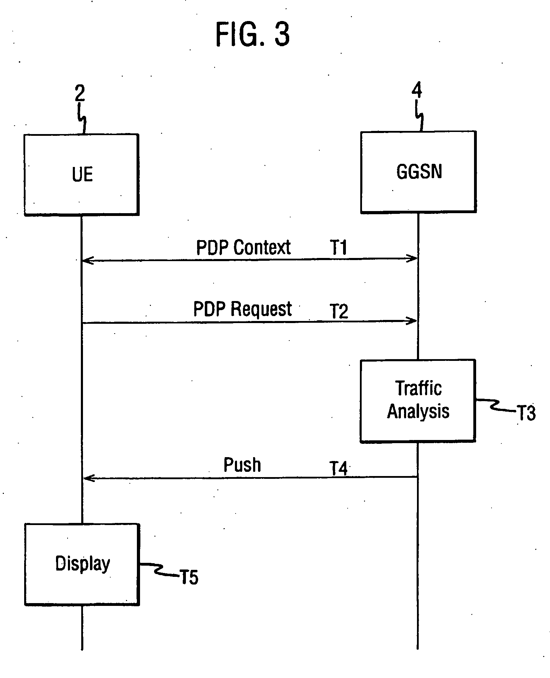

Reference is now made to figure 3 which shows a signal flow in a second embodiment of the present invention. To simplify the signal flow, only the user equipment and GGSN 4 are shown. In the embodiment shown in figure 3, a WAP push message is used to inform the user equipment that traffic to the destination (for example an application (not shown in figure 3 for clarity)) is blocked. In this way, the application contained on the user equipment, which is trying to use the service, will receive a notification that the requested destination can not be reached.

In step T1 a PDP context is set up between the user equipment 2 and the GGSN 4. As with the embodiment shown in figure 2, the GGSN may receive information regarding the user equipment subscription.

In step T2, the user equipment will start sending packets, for example a PDP request to the GGSN 4. This PDP request T2 is intended for the application. The GGSN will of course receive the PDP request T2 since all packets need to go via the GGSN.

In step T3, the GGSN performs traffic analysis. This is as described in relation to the embodiment shown in figure 2. The packet matches with a certain flow specification F. The flow specification F is part of the service S. The GGSN will notice that the service S has been denied from the mobile subscriber either because service is not one to which the user subscribes or because there is insufficient funds if the user is a prepaid user. The GGSN will then discard the packet received from the user equipment.

The GGSN generates a push message which is sent in step T4 to the user equipment. In step T5, the push message is displayed in the user equipment.

The push message is similar to an HTTP message. It contains a message body which can be using any MIME content type. Thus, the push message may contain an informative message which is shown to the end user of the user equipment. This informative message may indicate the reason why the request has failed, for example, that the user has insufficient funds or that the user has not subscribed to the service in question.

There are a number of different ways in which the GGSN can send a Push message to the user equipment. It should be appreciated that the structure of the push message is defined in the WAP standard.

The Push-OTA specification (over the air) (WAP forum) describes how the GGSN or any other network element may send Push messages to the user equipment. The used primitive is Po-Unit-Push. The primitive is implemented using WSP (wireless session protocol). The wireless session protocol supports a non confirmed Push service without an existing WSP session. The Push service in the WSP allows the GGSN to send Push data to the client at any time when the PDP context is active. Non confirmed out of session data push can be used to send one way messages over an unreliable transport. The push-OTA primitive Po-Unit-Push is mapped to WSP primitive S-Unit-Push.

The connectionless WSP transport primitives are mapped to the WDP protocol (wireless datagram protocol). The corresponding WDP primitive is T-Dunitdata.req. The GGSN supports WDP over IP, and then the WDP packets are transmitted in UDP packets. The connectionless push uses the port number 2948 in the user equipment.

The detailed encoding of the push message is given in the WAP specifications. The push message contains both header and body part. The body is the content of the push message and is equivalent to the HTTP entity body. Thus, the GGSN can write an informative message about the cause of the service denial. In other words, the informative message can indicate that the service has been denied because the user has insufficient funds or that the service has been denied because the user has not subscribed to the particular service. In addition, the push body may contain a link to a portal where the mobile subscriber may modify his status in order to enable the service (by subscribing to the service or by recharging funds to the prepaid account).

The GGSN could also use the connection mode WSP to delivery the push message. The connectionless push messages are unreliable because the user equipment does not confirm that it has received the push message. The connection mode WSP addresses this problem. On the other hand, the connectionless push requires sending just one UDP packet to the user equipment so that it does not require any state information. Furthermore, the GGSN may retransmit the push message if the user equipment tries to access the denied service again.

In another solution, particular applicable where the user equipment is not capable of receiving non confirmed connectionless push message in port 2948, the push message can be delivered by the push proxy gateway (PPG) which is part of the WAP push architecture. The PPG knows the capabilities of the user equipment and it may actually deliver the push message over SMS (sort message service) if no other alternatives are available.

Where the PPG is deployed, the GGSN shall first submit the push message to the PPG and it will then deliver it to the user equipment. In other words, step T4 shown in figure 3 would be replaced by two steps where the GGSN sends the push message to the PPG and the PPG sends the push message to the user equipment. The GGSN and PPG communicate using the PAP protocol (push access protocol) which is defined in the WAP standards. PAP is carried over HTTP. When the push message needs to be delivered to the user equipment, the GGSN uses the submission procedure described in the PAP specification.

Embodiments of the present invention have the advantage that this solution is not application specific. Additionally, embodiments of the present invention can be used during a connection, in other words messages can be delivered at any time. The push message can contain a user friendly message and URL links. The URL links may be to allow the user to subscribe to the service in question or to top up their account.

The GGSN can send any of the following WAP push notifications to the mobile subscriber. These notifications can be sent during following times:
- a notification when the PDP context has been created (e.g. to inform about new services, when the mobile subscriber has "logged" to the network).
- a notification when the PDP context has been deleted (e.g. to inform how much the prepaid user has funds left in the prepaid account, or how much the user has used services). This functionality can be implemented also in the OCS.
- a notification is sent when the service is accessed first time during the PDP context (e.g. to inform about the cost of using the service).
- a notification is sent when the mobile subscriber roaming status has been changed.
- a notification is sent when the PDP context could not be created for some reason to inform the user about the reasons for the failure (this notification uses the PPG, because the push message cannot be otherwise delivered to the UE as there is no open PDP context).

It should be appreciated that push messages may support also SL (service loading) functionality. SL is also defined in WAP standards. When the UE receives Push message containing SL, it will automatically load the URL from the application server. The URL is part of the SL Push message. In other words, it is possible to redirect the mobile subscriber to another location with SL. SL-based redirection opens a new session, while prior art arrangements modify the existing session. The SL based redirection in embodiments of the present invention do not depend on the type of service because a new session is started. The SL based solution used in some embodiments of the invention will not require proxy functionality in the GGSN.

It should be appreciated that embodiments of the present invention may be modified.

For example, in some of embodiments, the SGSN may provide some or all of the functions shown by the GGSN embodying the invention. There are advantages to using the GGSN in that with the current specifications, as the GGSN looks at the packet anyway. Secondly, the GGSN used will be the user's home network GGSN. It should be appreciated that in alternative embodiments, other nodes equivalent to the GGSN may be used. In some embodiments of the present invention, the function provided by the GGSN in the described embodiments may be provided by two or more nodes.

Other embodiments of the present invention, at least some of the functions provided by the GGSN may be provided by a traffic analyser and/or content analyser. The traffic analyser and/or content analyser determines the service and could provide similar functions. In some embodiments of the present invention, a traffic analyser and/or a content analyser can be used in conjunction with a GGSN to provide the functions described in relation to the GGSN shown in figures 2 and 3. A radius server may also be used to provide at least some of the functions provided by the GGSN shown in figures 2 and 3.

Embodiments of the invention may be used for any cause for service denial in addition to the two mentioned.

As mentioned previously, embodiments of the invention can be used in circuit switched systems. In particular both WAP and ICMP are applicable in the circuit switched environment. One difference from the described embodiment is the network elements used (e.g. GGSN would be replaced with a generic gateway node). The same applies also to other wireless networks, where WAP is usable (e.g. CDMA networks). The solution would be usable also in WLAN and fixed data networks, if the UE supports, for example, WAP push. ICMP works in any IP network.

## Claims

1. A gateway node (4) for use in a communications network, said node (4) being arranged
to receive (T2) a request for a service,
to determine (T3) if said service can be provided and if not
to generate and send (T4) a message to a requester (2) of the service with an indication as to a cause as to why said service cannot be provided; **characterised in that** the node (4) is further arranged to indicate as a source of said message a provider (14) of said requested service.

2. A node as claimed in claim 1, wherein said message is one of a WAP push message; a WAP SL message and a ICMP message.

3. A node as claimed in claim 1 or 2, wherein said message contains information defining a link to a location from which the cause for the service not being provided can be removed.

4. A node as claimed in any preceding claim, wherein said indication comprises at least one of code values and a explanatory text.

5. A node as claimed in any preceding claim, wherein said node (4) comprises at least one of a GGSN, traffic analyser and a content analyser.

6. A node as claimed in any preceding claim, wherein said node (4) is arranged to discard packets from a requester (2) if said service cannot be provided.

7. A node as claimed in any preceding claim, wherein said node (4) is arranged to perform traffic analysis on traffic received from said requester (2).

8. A node as claimed in claim 7, wherein said node (4) is arranged to determine if a part of said traffic matches a flow specification.

9. A node as claimed in any preceding claim, wherein said message indicates if the service has not been provided due to insufficient funds or if the requester (2) has not subscribed to the requested service.

10. A node as claimed in any preceding claim, wherein said message is delivered via a gateway.

11. A node as claimed in claim 10 when appended to claim 2, wherein said gateway comprises a push proxy gateway.

12. A node as claimed in any preceding claim, wherein said node (4) is arranged to send one or more of the following notifications to said requester (2):
a notification when a PDP context has been created;
a notification when a PDP context has been deleted;
a notification when a service is accessed for a first time during a PDP context;
a notification when the requester's roaming status has been changed; and
a notification when a PDP context cannot be created.

13. A method of communication comprising:
determining (T3) in a gateway node (4) if a requested service can be provided;
if not, sending (T4) a message to a requester (2) of service, said message indicating a cause for said service not being provided; and
discarding in said gateway node (4), traffic received from said requester (2); **characterised in that** said message further indicates as a source of said message a provider (14) of said requested service.

## Patentansprüche

1. Gateway-Knoten (4) zur Verwendung in einem Kommunikationsnetz, wobei der Knoten (4) eingerichtet ist,
eine Anforderung nach einem Dienst zu erhalten (T2),
zu bestimmen (T3), ob der Dienst zur Verfügung gestellt werden kann und wenn nicht
eine Nachricht zu erzeugen und an einen Anforderer (2) des Dienstes mit einem Hinweis bezüglich einer Ursache dafür, warum der Dienst nicht bereitgestellt werden kann, zu senden (T4); **dadurch gekennzeichnet, dass** der Knoten (4) weiter eingerichtet ist, als eine Quelle der Nachricht einen Anbieter (14) des angeforderten Dienstes anzuzeigen.

2. Knoten nach Anspruch 1, wobei die Nachricht eine WAP-Push-Nachricht oder eine WAP-SL-Nachricht oder eine ICMP-Nachricht ist.

3. Knoten nach Anspruch 1 oder 2, wobei die Nachricht Informationen enthält, die einen Link zu dem Ort, von dem die Ursache dafür, dass der Dienst nicht zur Verfügung gestellt wird, entnommen werden kann.

4. Knoten nach einem vorhergehenden Anspruch, wobei der Hinweis umfasst Codewerte und/oder einen Erläuterungstext.

5. Knoten nach einem vorhergehenden Anspruch, wobei der Knoten (4) umfasst einen GGSN und/oder eine Verkehrsanalyseeinrichtung und/oder eine Content-Analyseeinrichtung.

6. Knoten nach einem vorhergehenden Anspruch, wobei der Knoten (4) eingerichtet ist, Pakete von einem Anforderer (2) zu verwerfen, wenn der Dienst nicht zur Verfügung gestellt werden kann.

7. Knoten nach einem vorhergehenden Anspruch, wobei der Knoten (4) eingerichtet ist, eine Verkehrsanalyse auf für Anforderer (2) empfangenem Verkehr durchzuführen.

8. Knoten nach Anspruch 7, wobei der Knoten (4) eingerichtet ist, festzustellen, ob ein Teil des Verkehrs einer Flussspezifikation entspricht.

9. Knoten nach einem vorhergehenden Anspruch, wobei die Nachricht anzeigt, ob der Dienst aufgrund unzureichender Geldmittel nicht angeboten worden ist, oder ob der Anfragende (2) den angefragten Dienst nicht bestellt hat.

10. Knoten nach einem vorhergehenden Anspruch, wobei die Nachricht über einen Gateway zugestellt wird.

11. Knoten nach Anspruch 10, wenn von Anspruch 2 abhängig, wobei der Gateway einen Push Proxy-Gateway umfasst.

12. Knoten nach einem vorhergehenden Anspruch, wobei der Knoten (4) eingerichtet ist, einen oder mehrere der folgenden Benachrichtigungen an den Anforderer (2) zu senden:
eine Benachrichtigung, wenn ein PDP-Kontext erstellt worden ist;
eine Benachrichtigung, wenn ein PDP-Kontext gelöscht worden ist;
eine Benachrichtigung, wenn auf einen Dienst zum ersten Mal während eines PDP-Kontextes zugegriffen wird;
eine Benachrichtigung, wenn sich der Roaming-Status des Anfordernden geändert hat; und
eine Benachrichtigung, wenn ein PDP-Kontext nicht erstellt werden kann.

13. Kommunikationsverfahren umfassend:
Bestimmen (T3) in einem Gateway-Knoten (4), ob ein angeforderter Dienst zur Verfügung gestellt werden kann;
wenn nicht, Senden (T4) einer Nachricht an einen Anforderer (2) eines Dienstes, wobei die Nachricht eine Ursache für das Nichtbereitstellen des Dienstes angibt; und
Verwerfen von vom Anforderer (2) empfangenen Verkehr im Gateway-Knoten (4); **dadurch gekennzeichnet, dass** die Nachricht weiter einen Dienstanbieter (14) des angeforderten Dienstes als eine Quelle der Nachricht angibt.

## Revendications

1. Noeud de passerelle (4) destiné à être utilisé dans un réseau de communication, ledit noeud (4) étant agencé :
pour recevoir (T2) une demande pour un service,
pour déterminer (T3) si ledit service peut être fourni et si tel n'est pas le cas
pour générer et envoyer (T4) un message à un demandeur (2) du service avec une indication d'une cause pour laquelle ledit service ne peut pas être fourni ; **caractérisé en ce que** le noeud (4) est en outre agencé pour indiquer en tant que source dudit message un fournisseur (14) dudit service demandé.

2. Noeud selon la revendication 1, dans lequel ledit message est l'un d'un message push WAP, d'un message WAP SL et d'un message ICMP.

3. Noeud selon la revendication 1 ou 2, dans lequel ledit message contient des informations définissant un lien vers un emplacement duquel la cause pour laquelle le service n'est pas fourni peut être supprimée.

4. Noeud selon l'une quelconque des revendications précédentes, dans lequel ladite indication comprend au moins l'une des valeurs de code et d'un texte explicatif.

5. Noeud selon l'une quelconque des revendications précédentes, dans lequel ledit noeud (4) comprend au moins l'un d'un GGSN, d'un analyseur de trafic et d'un analyseur de contenu.

6. Noeud selon l'une quelconque des revendications précédentes, dans lequel ledit noeud (4) est agencé pour éliminer des paquets d'un demandeur (2) si ledit service ne peut pas être fourni.

7. Noeud selon l'une quelconque des revendications précédentes, dans lequel ledit noeud (4) est agencé pour effectuer une analyse de trafic sur le trafic reçu dudit demandeur (2).

8. Noeud selon la revendication 7, dans lequel ledit noeud (4) est agencé pour déterminer si une partie dudit trafic correspond à une spécification de flux.

9. Noeud selon l'une quelconque des revendications précédentes, dans lequel ledit message indique si le service n'a pas été fourni en raison de fonds insuffisants ou si le demandeur (2) n'est pas abonné au service demandé.

10. Noeud selon l'une quelconque des revendications précédentes, dans lequel ledit message est fourni par l'intermédiaire d'une passerelle.

11. Noeud selon la revendication 10 lorsqu'elle est annexée à la revendication 2, dans lequel ladite passerelle comprend une passerelle de proxy push.

12. Noeud selon l'une quelconque des revendications précédentes, dans lequel ledit noeud (4) est agencé pour envoyer une ou plusieurs des notifications suivantes au dit demandeur (2) :
une notification lorsqu'un contexte PDP a été créé ;
une notification lorsqu'un contexte PDP a été supprimé ;
une notification lorsqu'un service est accédé pour la première fois au cours d'un contexte PDP ;
une notification lorsque le statut d'itinérance du demandeur a été changé ; et
une notification lorsqu'un contexte PDP ne peut pas être créé.

13. Procédé de communication comprenant les étapes consistant à :
déterminer (T3) dans un noeud de passerelle (4) si un service demandé peut être fourni ;
si tel n'est pas le cas, envoyer (T4) un message à un demandeur (2) du service, ledit message indiquant une cause pour laquelle ledit service n'est pas fourni ; et
éliminer dans ledit noeud de passerelle (4) le trafic reçu dudit demandeur (2) ; **caractérisé en ce que** ledit message indique en outre en tant que source dudit message un fournisseur (14) dudit service demandé.
